# EUROPEAN PATENT SPECIFICATION

(11) **EP 4 610 135 B1**
(45) Date of publication and mention of the grant of the patent: **08.04.2026**
(21) Application number: 24160988.2
(22) Date of filing: 01.03.2024
(51) Int. Cl.: B60W 50/00

(54) **SELECTING A CONTROLLER FOR A VEHICLE**
AUSWAHL EINES STEUERGERÄTS FÜR EIN FAHRZEUG
SÉLÉCTION D'UN MODULE DE CONTRÔLE PUR UN VÉHICULE

(43) Date of publication of application: 03.09.2025
(73) Proprietor: VOLVO TRUCK CORPORATION, 405 08 Göteborg (SE)
(72) Inventor: ÖZKAN, Basar, 417 57 Göteborg (SE); GELSO, Esteban, 421 51 Västra Frölunda (SE); SADEGHI KATI, Maliheh, 433 51 Öjersjö (SE); JONASSON, Mats, 433 49 Partille (SE)
(74) Representative: Ström & Gulliksson AB

(56) References cited:
- WO-A1-2007/070988
- WO-A1-2023/193893
- JP-A- S62 116 347
- US-A1- 2022 402 508
- US-A1- 2024 001 928

## Description

### TECHNICAL FIELD

The disclosure relates generally to vehicle control. In particular aspects, the disclosure relates to selecting a controller for a vehicle. The disclosure can be applied in heavy-duty vehicles, such as trucks, buses, and construction equipment. In particular, the disclosure can be applied in multi-unit vehicle combinations with distributed propulsion and energy storage. Although the disclosure may be described with respect to a particular vehicle, the disclosure is not restricted to any particular vehicle.

### BACKGROUND

**In** vehicle motion management, a control system of a vehicle may determine control signals for actuators of the vehicle in order to satisfy the requested global forces of the vehicle. For example, the control system may receive an input related to a manoeuvre for the vehicle and state information of the vehicle comprising motion parameters, and determine control signals, for example in the form of propulsion, braking, steering, and/or suspension instructions, that meet the requested global forces of the vehicle subject to certain constraints, for example energy and safety constraints.

**In** some implementations, a vehicle control system may comprise a number of different controllers directed to different purposes. For example, it may be desired to minimise power losses, ensure vehicle stability, provide an efficient power distribution, and address many other issues. In other examples, a vehicle may be run as front wheel drive, rear wheel drive or all-wheel drive. The different controllers can be switched between dependent on current demands of the vehicle or the operator.

Selection of which controller to use at a given instant may depend on desired outcomes. In some cases, the performance of the different controllers can be predicted to inform the selection. However, uncertainties in the data used to make such predictions can lead to inaccurate or unreliable results, and therefore an inappropriate or even unsafe selection of a controller.

US 2024/0001928 Al discloses predictive energy and motion management for multi-trailer heavy-duty vehicles. A method is disclosed for controlling motion of a heavy-duty vehicle comprising determining a vehicle motion profile for performing a vehicle manoeuvre along an upcoming vehicle path as a solution to a non-linear optimal control problem constrained by lateral and longitudinal wheel slip limits and formulated to account for a road friction coefficient and/or curvature along the upcoming vehicle path.

WO 2007/070988 Al discloses a power dolly and a multi-combination vehicle including a power dolly. The powered dolly can support a separate source of motive power to that of the prime mover, provide sufficient cooling therefor, and is able to be controlled whilst coupled to a trailer.

It is therefore desired to develop a solution for vehicle motion management that addresses or at least mitigates some of these issues.

### SUMMARY

This disclosure provides systems, methods and other approaches for selecting a vehicle controller for use in control of a vehicle. In particular, systems and methods are proposed in which a plurality of input values representing an uncertainty in an input variable are acquired for each of one or more input variables. Different combinations of the input values are used to simulate performance of the vehicle for each of a plurality of vehicle controllers. A total cost is determined for each vehicle controller based on the simulations, and a vehicle controller is selected based on the determined costs.

According to a first aspect of the disclosure, there is provided a computer system for selecting a vehicle controller for use in control of a vehicle, the computer system comprising processing circuitry configured to acquire a plurality of input values for each of one or more input variables for simulating performance of the vehicle, wherein the plurality of input values represent an uncertainty in the respective input variable, simulate performance of the vehicle for each of a plurality of vehicle controllers, wherein a respective simulation is performed for each vehicle controller for each of a plurality of combinations of input values, determine a total cost for each vehicle controller based on the plurality of simulations performed for the respective vehicle controller, and select a vehicle controller from the plurality of vehicle controllers based on the determined costs.

The first aspect of the disclosure may seek to provide a computer system that enables selection of a vehicle controller that takes uncertainties in input data into account. In particular, by simulating vehicle performance based on different combinations of input values that reflect uncertainties in input variables, a more complete understanding of possible vehicle performance is provided, and a more appropriate selection of a vehicle controller can be made.

Optionally in some examples, including in at least one preferred example, the plurality of input values for a respective input variable comprises an upper and lower bound for the input variable and/or a distribution of input values. A technical benefit may include that extreme values for an input variable are considered and therefore extreme behaviours of the vehicle can be taken into account. A technical benefit may also include that a number of relevant values for an input variable are considered and various possible behaviours of the vehicle can be taken into account.

Optionally in some examples, including in at least one preferred example, the plurality of input values are user-defined, determined based on historical data, and/or determined based on a statistical method. A technical benefit may include that different approaches to generating input values can be selected based on relevant requirements, such as availability of computational resources.

Optionally in some examples, including in at least one preferred example, the processing circuitry is configured to simulate performance of the vehicle based on a current operating point of the vehicle. A technical benefit may include that an online assessment can be performed of which controllers are appropriate, as the simulations are based on real time values relating to the vehicle.

Optionally in some examples, including in at least one preferred example, the processing circuitry is configured to simulate performance of the vehicle based on a plurality of operating points of the vehicle, and store the determined total costs in a computer storage system of the vehicle. A technical benefit may include that controller assessment for a given condition is already performed and stored, meaning that it need only be retrieved from the computer storage system, processing resources on the vehicle are saved, and any latency issues with performing simulations online are avoided.

Optionally in some examples, including in at least one preferred example, determining a total cost for a vehicle controller comprises determining a cost associated with each simulation for the respective vehicle controller, and determining a sum of the determined costs. A technical benefit may include that a complete assessment of controller suitability may be performed as all simulations of vehicle performance are taken into account.

Optionally in some examples, including in at least one preferred example, the cost associated with a simulation is determined based on one or more of longitudinal, lateral, and/or vertical acceleration and/or jerk of the vehicle, energy losses of the vehicle, a force margin to the friction limit of the tyres of the vehicle, a tyre wear value, peak power of the vehicle, deviation from a reference path, a yaw rate and/or deviation from a target yaw rate of the vehicle, a velocity and/or deviation from a target velocity of the vehicle, a roll angle of the vehicle, an articulation angle between units of the vehicle, and a pitch angle of the vehicle. A technical benefit may include that the controllers can be assessed based on one or more particular parameters of interest, which may change dependent on operating conditions of the vehicle.

Optionally in some examples, including in at least one preferred example, the processing circuitry is configured to discard any vehicle controllers having simulation results that are outside of a set of predetermined limits and/or having a cost above a predetermined value. A technical benefit may include that any controllers that results in unstable or unsafe motion are no longer considered for implementation.

Optionally in some examples, including in at least one preferred example, the plurality of vehicle controllers comprises an online vehicle controller and one or more offline vehicle controllers. A technical benefit may include that operation of controllers can be assessed based on how the vehicle is currently being controlled and possible options for upcoming control of the vehicle.

Optionally in some examples, including in at least one preferred example, the processing circuitry is configured to simulate performance of the vehicle based on one or more switching methods from the online controller to each of the one or more offline controllers. A technical benefit may include that a more complete picture of the vehicle behaviour is provided when considering switching between an online and an offline controller.

Optionally in some examples, including in at least one preferred example, the processing circuitry is configured to select the vehicle controller having the lowest total cost. A technical benefit may include that the most optimal controller at a given instant is selected to control the vehicle.

According to a second aspect of the disclosure, there is provided a vehicle comprising the computer system of the first aspect. The second aspect of the disclosure may seek to provide a vehicle capable of providing a complete understanding of possible vehicle performance and making an appropriate selection of a vehicle controller that takes uncertainties in input data into account.

According to a third aspect of the disclosure, there is provided a computer-implemented method for determining a vehicle controller for use in control of a vehicle, the method comprising acquiring, by processing circuitry of a computer system, a plurality of input values for each of one or more input variables for simulating performance of the vehicle, wherein the plurality of input values represent an uncertainty in the respective input variable, simulating, by the processing circuitry, performance of the vehicle for each of a plurality of vehicle controllers, wherein a respective simulation is performed for each vehicle controller for a plurality of possible combinations of input values, determining, by the processing circuitry, a total cost for each vehicle controller based on the plurality of simulations performed for the respective vehicle controller, and selecting, by the processing circuitry, a vehicle controller of the plurality of vehicle controllers based on the determined costs.

The third aspect of the disclosure may seek to provide a computer-implemented method that enables selection of a vehicle controller that takes uncertainties in input data into account. In particular, by simulating vehicle performance based on different combinations of input values that reflect uncertainties in input variables, a more complete understanding of possible vehicle performance is provided, and a more appropriate selection of a vehicle controller can be made.

According to a fourth aspect of the disclosure, there is provided a computer program product comprising program code for performing, when executed by processing circuitry, the computer-implemented method of the third aspect. The fourth aspect of the disclosure may seek to enable new vehicles and/or legacy vehicles to be conveniently configured, by software installation/update, to determine a vehicle controller for use in control of a vehicle in a robust manner.

According to a fifth aspect of the disclosure, there is provided a non-transitory computer-readable storage medium comprising instructions, which when executed by processing circuitry, cause the processing circuitry to perform the computer-implemented method of the third aspect. The fifth aspect of the disclosure may seek to enable new vehicles and/or legacy vehicles to be conveniently configured, by software installation/update, to determine a vehicle controller for use in control of a vehicle in a robust manner.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** schematically shows, in terms of functional blocks, a control system for a vehicle.
**FIG. 2** is a flowchart of an example computer-implemented method for determining a vehicle controller for use in control of a vehicle.
**FIG. 3** is a schematic diagram of an exemplary computer system for implementing examples disclosed herein, according to one example.

Like reference numerals refer to like elements throughout the description.

### DETAILED DESCRIPTION

The detailed description set forth below provides information and examples of the disclosed technology with sufficient detail to enable those skilled in the art to practice the disclosure.

A vehicle control system may comprise a number of different controllers for different purposes, which can be switched between dependent on current demands of the vehicle. Selection of which controller to use at a given instant may depend on desired outcomes. In some cases, the performance of the different controllers can be predicted to inform the selection. However, uncertainties in the data used to make such predictions can lead to inaccurate or unreliable results, and therefore an inappropriate or even unsafe selection of a controller.

To remedy this, systems and methods are proposed for selecting a vehicle controller for use in control of a vehicle. In particular, systems and methods are proposed in which a plurality of input values representing an uncertainty in an input variable are acquired for each of one or more input variables. Different combinations of the input values are used to simulate performance of the vehicle for each of a plurality of vehicle controllers. A total cost is determined for each vehicle controller based on the simulations, and a vehicle controller is selected based on the determined costs.

It will be appreciated that the methods disclosed herein can be used with any suitable form of vehicle. For example, the disclosure can be applied in vehicle combinations having a plurality of units, heavy-duty vehicles, such as trucks, buses, and construction equipment, in personal vehicles such as cars, vans, or motorbikes, or in any other suitable form of vehicle.

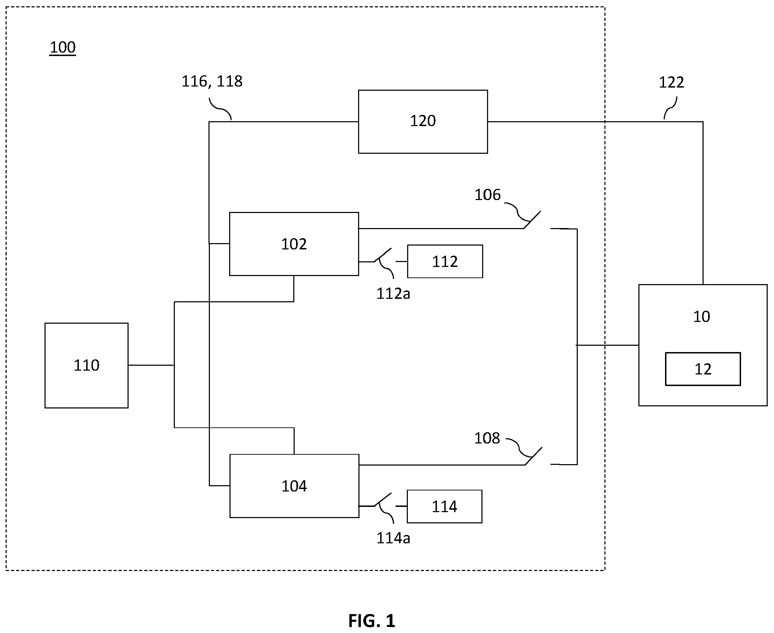

**FIG. 1** schematically shows a control system **100** for a vehicle **10.** The control system **100** is a computer system comprising processing circuitry configured to perform the various functions of the control system **100.** In particular, the various modules may be implemented as code running on a processing circuitry, or similar. The various modules may be communicatively connected or connectable to each other, for example as known in the art. The control system **100** may be implemented on-board the vehicle **10** or remotely from the vehicle **10.**

The control system **100** comprises a number of controllers configured to control motion of the vehicle **10** in different ways. In the example of **FIG. 1**, the control system **100** comprises a first controller **102** and a second controller **104.** The first and second controllers **102, 104** are configured to control at least one operational parameter of one or more motion support devices (MSDs) **12** of the vehicle **10.** Whilst two such controllers **102, 104** are shown in **FIG. 1**, it will be appreciated that the control system **100** may comprise any suitable number of controllers directed to suitable number of purposes.

An MSD **12** may be any suitable actuator or subsystem of the vehicle **10.** For example, an MSD **12** may be any one of an electrical machine (e.g. an electric motor), a set of service brakes, a combustion engine, a steering system (e.g. a steering system controlled by an electric motor), or a suspension system (e.g. an active or semi-active suspension system). It will be appreciated that the vehicle **10** may have any suitable number of MSDs **12** to enable operation and control of the vehicle **10**. An MSD **12** may be associated with a single wheel/tyre, two or more wheels/tyres on a common axle, or any suitable number of wheels/tyres.

The first and second controllers **102**, **104** are communicatively connectable to the vehicle **10** via respective switches **106**, **108**, such that they can control one or more operational parameters of the one or more MSDs **12.** An operational parameter of the MSD **12** may be a torque or a speed of the MSD **12.** The speed of an MSD **12** may be related to a wheel speed or a wheel slip, for example in the case of an electrical machine that drives one or more wheels of the vehicle **10.** In some examples, one set of controllers may control a torque of one or more MSDs **12,** while another set of controllers may control a speed of one or more MSDs **12.** This enables operation of the MSD **12** to be controlled appropriately and for the control to be implemented in existing control interfaces.

Other examples of operational parameters that can be controlled by the first and second controllers **102, 104** include the steering angle of one or more wheels of the vehicle **10,** suspension forces or suspension displacements of the vehicle **10,** damping in the suspension elements, clutch engagement, gear selection, and differential lock. Controlling the steering angle provides lateral stability control, lane following, lane change, turn manoeuvers, and the like. The steering angle may be changed with an electric motor or electrohydraulic system. Controlling the suspension forces or suspension displacements enables the roll/pitch angle or height of the vehicle to be controlled. The suspension actuator can be, for example, electric, hydraulic, or pneumatic. If it is hydraulic or pneumatic, air flow or pressure may also be controlled. Controlling the damping in the suspension elements enables the ride properties to be changed. Controlling the clutch engagement enables the clutch to engage/disengage axles from each other as well as from the power source (e.g. the engine). Controlling the clutch gear selection enables control of the torque on the tires. Locking differentials is useful for off-road or construction equipment and helps stop spinning of certain tires.

The first and second controllers **102, 104** are also communicatively connected to a target generator **110** that provides a requested control input for the vehicle **10** to the controllers. The requested control input relates to a manoeuvre for the vehicle **10.** The manoeuvre may be, for example, straight-line driving, cornering, braking and the like. The target generator **110** may receive a signal from, for example, a steering wheel and/or gas/brake pedal of the vehicle **10,** indicating that the driver (or some other system of the vehicle **10**) wants to change the direction and/or the speed of the vehicle **10** in a certain way. In some examples, the signal may originate from elsewhere, for example any other system that may provide some indication of how the overall forces of the vehicle **10** are to be influenced (e.g. steered, propelled or braked). For example, the signal may originate from a lane assist system, a lane following system, an emergency steering system, an emergency braking system, an automated or semi-automated drive system. Based on this input, and in some examples a motion capability for the vehicle **10**, the target generator **110** outputs the requested control input.

In some examples, the first controller **102** may be communicatively connected to the vehicle **10** (i.e. the switch **106** is closed) and control one or more operational parameters of the one or more MSDs **12** of the vehicle **10.** The first controller **102** may therefore be referred to as the "online" controller in these examples. The second controller **104** is then referred to as the "offline" controller (i.e. the switch **108** is open). Alternatively, the second controller **104** may be communicatively connected to the vehicle **10** (i.e. the switch **108** is closed) and control one or more operational parameters of the one or more MSDs **12** of the vehicle **10.** The second controller **104** may therefore be referred to as the "online" controller. The first controller **102** is then referred to as the "offline" controller (i.e. the switch **106** is open).

In some examples, the first and second controllers **102**, **104** are also communicatively connected to respective first and second vehicle models **112**, **114**. For example, the first and second controllers **102, 104** may be communicatively connected to the first and second vehicle models **112, 114** via respective switches **112a**, **114a**. The first and second vehicle models **112, 114** may be any suitable vehicle models known in the art. The first and second vehicle models **112, 114** may be used to model and/or predict motion of the vehicle **10**, including values for the operational parameters of the MSDs **12**. In this way, offline controllers can model motion of the vehicle **10** while it is being controlled by an online controller. In particular, the first and second vehicle models **112, 114** may be used to model and/or predict the vehicle velocity, tyre forces, a torque of one or more electric motors, an angular velocity of one or more electric motors, a twist angle of the shaft of one or more electric motors, and/or an angular velocity of one or more wheels, along with any other suitable variables for motion of the vehicle **10**. The motion of the vehicle **10** may be longitudinal, lateral, vertical and/or rotational (about any axis: yaw, roll and/or pitch) motion. In the case of a vehicle combination, the vehicle models **112, 114** may be used to model motion of the individual units and/or the vehicle combination as a whole. The first and second vehicle models **112, 114** may have a prediction horizon of the order of a number of seconds.

The first and second vehicle models **112, 114** may be based on estimated states **116** and/or parameters **118** of the vehicle **10**, which are received from an estimator **120**. States **116** of the vehicle **10** include transient variables such as velocity, position, pressure, and the like. Parameters **118** of the vehicle **10** include values that describe the vehicle **10** and are generally constant, such as mass, tyre stiffness, tyre radius, and the like. The first and second vehicle models **112**, **114** may also be based on inputs such as road inclination, air drag force and reference values for tyre forces. The first and second vehicle models **112**, **114** may be constrained by parameters such as actuator limits of the vehicle **10**. A vehicle model may be used when its respective controller is online, i.e. controlling the vehicle **10**, or offline, i.e. not controlling the vehicle **10**.

The estimator **120** may be communicatively connected to the vehicle **10** and configured to receive sensor measurements **122** from the vehicle **10.** The sensor measurements **122** may come from sensors on board the vehicle **10**, such as wheel speed sensors, inertial measurement units (IMUs, comprising accelerometers, gyroscopes, and magnetometers), electric machine speed sensors, global positioning systems, LIDAR sensors, radar sensors, cameras, and the like. Based on the sensor measurements **122**, the estimator **120** estimates states **116** and/or parameters **118** of the vehicle **10**. In some examples, the estimator **120** may be omitted, and the sensors of the vehicle **10** may be configured to perform estimation of states **116** and/or parameters **118** themselves or measure them directly.

Selection of which controller to use at a given instant may depend on desired outcomes. In some cases, the performance of the different controllers can be predicted to inform the selection. For example, a vehicle model, such as the first and second vehicle models **112**, **114**, may be used to simulate and/or predict the behaviour of the vehicle for a given controller, based on the estimated states **116** and/or parameters **118** of the vehicle **10** that are input the model. However, there may be uncertainties in raw data from sensors, processing of that data, and the like. Uncertainties in the estimated states **116** and/or parameters **118** can lead to inaccurate or unreliable results, and therefore an inappropriate or even unsafe selection of a controller.

There are many potential sources of uncertainty in the estimated states **116** and/or parameters **118.** Many uncertainties come from sensor errors and/or modelling errors (e.g. due to simplifications, inaccurate assumptions, uncertainty in parameters, unknown disturbances, etc.). For example, most sensors have errors in their measurements (e.g. in accelerometers it is common to have a bias (fixed error) and noise in the measurement). Furthermore, tyre modelling can be challenging due to uncertainty in weather/road conditions. There is uncertainty in how slippery the road is depending on whether it is dry, wet, snowy, icy, muddy, etc. Tyre performance is also dependent on tyre wear, tyre temperature, and the like, which can also be difficult to estimate with certainty. Weight distribution in a vehicle, for example a trailer unit that carries goods, is also challenging to estimate even if suspension forces can be measured, as there are often not enough sensors to measure the exact distribution. The age of the vehicle may result in different performance of the parts of the vehicle resulting in uncertainty. Other vehicles and pedestrians also produce uncertainties in terms of vehicle manoeuvring. There is also uncertainty in the case of a human driver where decisions and actions may be unpredictable.

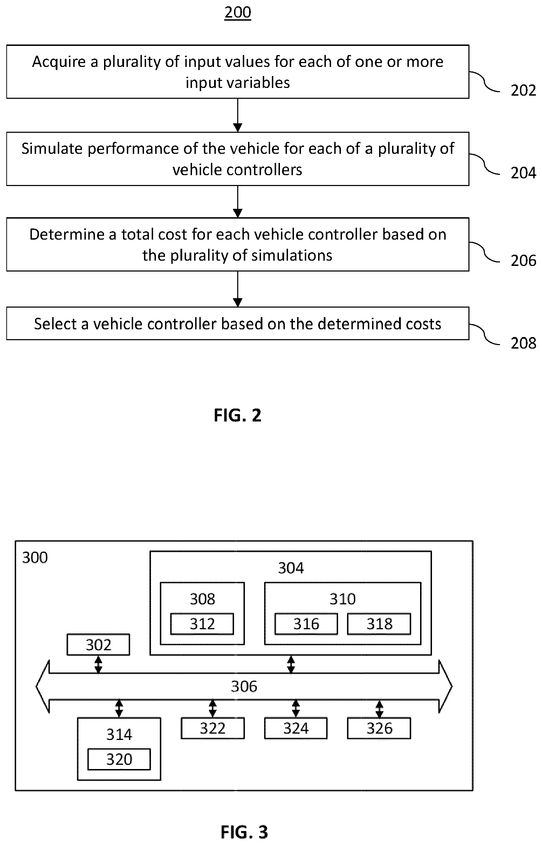

**FIG. 2** is a flowchart of an example computer-implemented method **200** for determining a vehicle controller for use in control of a vehicle, such as the first and second controllers **102, 104** of the vehicle **10** illustrated in **FIG. 1**. The method may be implemented by processing circuitry, for example as code running on a processing circuitry, or similar. In particular, the method **200** may be implemented by the control system **100.**

**At 202,** a plurality of input values are acquired for each of one or more input variables. An input variable is a state **116** or parameter **118** that can be used for simulating performance of the vehicle **10.** As discussed above, states **116** of the vehicle **10** include transient variables such as velocity, position, pressure, and the like. Parameters **118** of the vehicle **10** include values that describe the vehicle and are generally constant, such as mass, tyre stiffness, tyre radius, and the like. Other input variables may include road inclination, air drag force and reference values for tyre forces.

The plurality of input values that are acquired for each input variables represent an uncertainty in the respective input variable. For example, the plurality of input values may be an upper and lower bound for the input variable, i.e. a maximum and minimum possible value, that cover a possible range of uncertainty. For example, for a velocity input, a maximum possible value may be 22 m/s, while a minimum possible value may be 20 m/s. This may ensure that extreme behaviours of the vehicle **10** due to extreme values of the input variable can be taken into account. The plurality of input values may also be a distribution of input values, for example a number of values spread between two upper and lower bounds. The distribution may be an even distribution between the bounds. For example, for the velocity input above, the input values may be 20 m/s, 20.5 m/s, 21 m/s, 21.5 m/s, and 22 m/s. This may ensure that a number of relevant values for an input variable are considered and various possible behaviours of the vehicle can be taken into account. Alternatively, the distribution may be a distribution that reflects the most likely values in the range (e.g. the density of the distribution may be higher in a region where the measurement is considered more reliable). For example, for the velocity input above, and given a most likely value of 21.5 m/s, the input values may be 20 m/s, 21 m/s, 21.25 m/s, 21.5 m/s, 21.75 m/s, and 22 m/s. This may ensure that the most relevant values for an input variable are considered and the most likely behaviours of the vehicle can be taken into account.

In some examples, the plurality of input values are user-defined. In some examples, the plurality of input values are determined based on historical data. In some examples, the plurality of input values are determined based on a statistical method, such as Kalman filtering. For example, linear or nonlinear filters can be used to determine the uncertainty distribution of the input values. Linear filters usually require fewer calculations whereas nonlinear filters require heavier computation loads. A commonly used linear filter is the linear Kalman filter. Nonlinear Kalman filters include extended Kalman filters, unscented Kalman filters and particle filters where the filters are listed in increasing computational load. One method is to determine the standard deviation using one of these methods, then randomly choose inputs assuming a normal distribution with this standard deviation around the most likely estimate. The more randomly inputs are chosen for simulation purposes, the more simulations must be performed, resulting in higher calculation load but a more robust set of results. It is also possible to choose two inputs (one to be a standard deviation below and the other to be a standard deviation above the most likely estimate).

**At 204,** performance of the vehicle **10** is simulated for each of a plurality of vehicle controllers. For example, in the context of **FIG. 1**, performance of the vehicle **10** is simulated for the first and second controllers **102**, **104**. In particular, a respective simulation is performed for each vehicle controller for a plurality of possible combinations of input values. That is to say, as there are a plurality of input values for each input variables, different combinations of input values can be used to perform different simulations.

Take an example where there are two input variables *v₁* and *v₂* for a vehicle model **112**, **114**. Each of these variables has a plurality of input values representing uncertainty in that variable: *v₁₁, v₁₂,* and *v₁₃* for *v₁,* and *v₂₁, v₂₂,* and *v₂₃* for *v₂.* The vehicle model **112**, **114** can perform simulations based on a plurality of combinations of these values. In this case, there are nine possible combinations: *v₁₁ + v₂₁, v₁₁* + *v₂₂, v₁₁*+ *v₂₃, v₁₂ + v₂₁, v₁₂* + *v₂₂, v₁₂*+ *v₂₃, v₁₃ + v₂₁, v₁₃ + v₂₂,* and *v₁₃*+ *v₂₃.*

In some examples, the input values may be determined based on current values of the input variables, such that the simulations are performed based on a current operating point of the vehicle **10.** For example, the relevant simulations can be performed when the vehicle **10** is being controlled and it is desired to make an "online" selection of a controller. This enables an online assessment of which controllers are appropriate to be performed, as the simulations are based on real time values relating to the vehicle. In some examples, the input values may be representations of different values of the input variables, such that the simulations are performed based on a plurality of representative operating points of the vehicle **10.** This may be the case when it is desired to perform a large number of simulations offline that can be stored in a computer storage system of the vehicle **10** for later retrieval. In this way, controller assessment for a given condition is already performed and stored, meaning that it need only be retrieved from the computer storage system, processing resources on the vehicle are saved, and any latency issues with performing simulations online are avoided.

As discussed in relation to **FIG. 1**, in some examples the first controller **102** may be online while the second controller **104** is offline. Simulations may be performed for both online and offline controllers, meaning that operation of the controllers can be assessed based on how the vehicle is currently being controlled and possible options for upcoming control of the vehicle. In some examples, simulating performance of the vehicle **10** may include simulating one or more switching methods between controllers. For example, as discussed. Simulation of the performance of the vehicle **10** for the second controller **104** may therefore include simulating different ways in which control is transferred from the first controller **102** to the second controller **104.** For example, the switch may be performed instantaneously, in a phased manner, or via an intermediate controller. If there is more than one offline controller, simulation of switching methods may be performed for each of them. This means that a more complete picture of the vehicle behaviour is provided when considering switching between an online and an offline controller.

In some examples, certain vehicle controllers may be discarded or discounted from further selection based on the simulation results. For example, if a particular vehicle controller has simulation results that are outside of a set of predetermined limits, e.g. stability limits, a safe operating envelope, or the like, the controller can be deemed unsuitable for control of the vehicle at the present time, and be removed from further consideration. Alternatively or additionally, if a particular vehicle controller has simulation results that have a cost above a predetermined value, for example a threshold cost, the controller may be removed from further consideration. Determination of costs for simulations is discussed in relation to **206** below.

**At 206,** a total cost is determined for each vehicle controller **102**, **104** based on the plurality of simulations performed for the respective vehicle controller **102**, **104**. That is to say, each simulation is associated with a cost that is determined based on the resulting performance. The cost may reflect different positive or negative aspects of the performance of the vehicle **10**. For example, a cost associated with a simulation may be determined based on one or more of longitudinal, lateral, and/or vertical acceleration and/or jerk of the vehicle **10**, energy losses of the vehicle **10**, a force margin to the friction limit of the tyres of the vehicle **10**, tyre wear, peak power of the vehicle **10**, deviation from a reference path, a yaw rate and/or deviation from a target yaw rate of the vehicle **10**, a velocity and/or deviation from a target velocity of the vehicle **10**, a roll angle of the vehicle **10**, an articulation angle between units of the vehicle **10**, and a pitch angle of the vehicle **10**. The roll angle may be considered in order to minimize risk of vehicle roll over. If there are a combination of vehicle units, each unit might have a different roll angle. The articulation angle, for example the angle between tractor and trailer or between other consecutive units, may be considered to minimize chance of jack-knifing. In this way, the controllers can be assessed based on one or more particular parameters of interest, which may change dependent on operating conditions of the vehicle.

Determining a total cost for a vehicle controller **102**, **104** may comprise determining a cost associated with each simulation for the respective vehicle controller **102**, **104,** and determining a sum of the determined costs. That is to say, all simulations are taken into account. In this way, a complete assessment of controller suitability may be performed. The costs for the different simulations should be expressed in a normalized fashion or have a common unit. In some examples, a weighted sum of the determined costs may be determined in order to take the importance of costs into account. For example, in certain scenarios, a certain magnitude in velocity might have a larger effect than the same magnitude in angle, meaning the simulations relating to velocity should be more heavily weighted. In another example, the cost related to being able to follow a lane may be considered more important than a cost related to comfort. In other examples, only certain costs and/or simulations may be taken into account, for example if it is desired to only consider a subset of the costs discussed above. In the offline implementation discussed above, the total costs determined for different representative operating points of the vehicle **10** may be stored in a computer storage system of the vehicle.

At **208,** a vehicle controller is selected based on the determined costs. For example, a controller having the lowest cost may be selected for controlling the vehicle **10**. In this way, the most optimal controller at a given instant is selected to control the vehicle **10**. In some examples, any controller having a total cost below a threshold may be selected. In this way, a number of controllers can be deemed suitable for controlling the vehicle **10**, and a particular one of these can then be selected based on one or more further criteria, for example to optimise energy efficiency or tyre wear.

**FIG. 3** is a schematic diagram of a computer system **300** for implementing examples disclosed herein. The computer system **300** is adapted to execute instructions from a computer-readable medium to perform these and/or any of the functions or processing described herein. The computer system **300** may be connected (e.g., networked) to other machines in a LAN, an intranet, an extranet, or the Internet. While only a single device is illustrated, the computer system **300** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **300** may comprise at least one computing device or electronic device capable of including firmware, hardware, and/or executing software instructions to implement the functionality described herein. The computer system 300 may include processing circuitry **302** (e.g., processing circuitry including one or more processor devices or control units), a memory **304**, and a system bus **306**. The computer system **300** may include at least one computing device having the processing circuitry **302**. The system bus **306** provides an interface for system components including, but not limited to, the memory **304** and the processing circuitry **302.** The processing circuitry **302** may include any number of hardware components for conducting data or signal processing or for executing computer code stored in memory **304**. The processing circuitry **302** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **302** may further include computer executable code that controls operation of the programmable device.

The system bus **306** may be any of several types of bus structures that may further interconnect to a memory bus (with or without a memory controller), a peripheral bus, and/or a local bus using any of a variety of bus architectures. The memory **304** may be one or more devices for storing data and/or computer code for completing or facilitating methods described herein. The memory **304** may include database components, object code components, script components, or other types of information structure for supporting the various activities herein. Any distributed or local memory device may be utilized with the systems and methods of this description. The memory **304** may be communicably connected to the processing circuitry **302** (e.g., via a circuit or any other wired, wireless, or network connection) and may include computer code for executing one or more processes described herein. The memory **304** may include non-volatile memory **308** (e.g., read-only memory (ROM), erasable programmable read-only memory (EPROM), electrically erasable programmable read-only memory (EEPROM), etc.), and volatile memory **310** (e.g., random-access memory (RAM)), or any other medium which can be used to carry or store desired program code in the form of machine-executable instructions or data structures and which can be accessed by a computer or other machine with processing circuitry **302**. A basic input/output system (BIOS) **312** may be stored in the non-volatile memory **308** and can include the basic routines that help to transfer information between elements within the computer system **300.**

The computer system **300** may further include or be coupled to a non-transitory computer-readable storage medium such as the storage device **314,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **314** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **314** and/or in the volatile memory **310**, which may include an operating system **316** and/or one or more program modules **318**. All or a portion of the examples disclosed herein may be implemented as a computer program **320** stored on a transitory or non-transitory computer-usable or computer-readable storage medium (e.g., single medium or multiple media), such as the storage device **314**, which includes complex programming instructions (e.g., complex computer-readable program code) to cause the processing circuitry **302** to carry out actions described herein. Thus, the computer-readable program code of the computer program **320** can comprise software instructions for implementing the functionality of the examples described herein when executed by the processing circuitry **302**. In some examples, the storage device **314** may be a computer program product (e.g., readable storage medium) storing the computer program **320** thereon, where at least a portion of a computer program **320** may be loadable (e.g., into a processor) for implementing the functionality of the examples described herein when executed by the processing circuitry **302**. The processing circuitry **302** may serve as a controller or control system for the computer system **300** that is to implement the functionality described herein.

The computer system **300** may include an input device interface **322** configured to receive input and selections to be communicated to the computer system **300** when executing instructions, such as from a keyboard, mouse, touch-sensitive surface, etc. Such input devices may be connected to the processing circuitry **302** through the input device interface **322** coupled to the system bus **306** but can be connected through other interfaces, such as a parallel port, an Institute of Electrical and Electronic Engineers (IEEE) 1394 serial port, a Universal Serial Bus (USB) port, an IR interface, and the like. The computer system **300** may include an output device interface **324** configured to forward output, such as to a display, a video display unit (e.g., a liquid crystal display (LCD) or a cathode ray tube (CRT)). The computer system **300** may include a communications interface **326** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:
Example 1: A computer system (100, 300) for selecting a vehicle controller (102, 104) for use in control of a vehicle (10), the computer system (100, 300) comprising processing circuitry (302) configured to: acquire a plurality of input values for each of one or more input variables (116, 118) for simulating performance of the vehicle (10), wherein the plurality of input values represent an uncertainty in the respective input variable (116, 118); simulate performance of the vehicle (10) for each of a plurality of vehicle controllers (102, 104), wherein a respective simulation is performed for each vehicle controller (102, 104) for each of a plurality of combinations of input values; determine a total cost for each vehicle controller (102, 104) based on the plurality of simulations performed for the respective vehicle controller (102, 104); and select a vehicle controller (102, 104) from the plurality of vehicle controllers (102, 104) based on the determined costs.
Example 2: The computer system (100, 300) of example 1, wherein the plurality of input values for a respective input variable (116, 118) comprises an upper and lower bound for the input variable (116, 118) and/or a distribution of input values.
Example 3: The computer system (100, 300) of example 1 or 2, wherein the plurality of input values are user-defined, determined based on historical data, and/or determined based on a statistical method.
Example 4: The computer system (100, 300) of any preceding example, wherein the processing circuitry (302) is configured to simulate performance of the vehicle (10) based on a current operating point of the vehicle (10).
Example 5: The computer system (100, 300) of any preceding example, wherein the processing circuitry (302) is configured to: simulate performance of the vehicle (10) based on a plurality of operating points of the vehicle (10); and store the determined total costs in a computer storage system of the vehicle (10).
Example 6: The computer system (100, 300) of any preceding example, wherein determining a total cost for a vehicle controller (102, 104) comprises determining a cost associated with each simulation for the respective vehicle controller (102, 104), and determining a sum of the determined costs, for example a weighted sum.
Example 7: The computer system (100, 300) of example 6, wherein the cost associated with a simulation is determined based on one or more of longitudinal, lateral, and/or vertical acceleration and/or jerk of the vehicle (10), energy losses of the vehicle (10), a force margin to the friction limit of the tyres of the vehicle (10), a tyre wear value, peak power of the vehicle (10), deviation from a reference path, a yaw rate and/or deviation from a target yaw rate of the vehicle (10), a velocity and/or deviation from a target velocity of the vehicle (10), a roll angle of the vehicle (10), an articulation angle between units of the vehicle (10), and a pitch angle of the vehicle (10).
Example 8: The computer system (100, 300) of any preceding example, wherein the processing circuitry (302) is configured to discard any vehicle controllers (102, 104) having simulation results that are outside of a set of predetermined limits and/or having a cost above a predetermined value.
Example 9: The computer system (100, 300) of any preceding example, wherein the plurality of vehicle controllers (102, 104) comprises an online vehicle controller (102, 104) and one or more offline vehicle controllers (102, 104).
Example 10: The computer system (100, 300) of example 9, wherein the processing circuitry (302) is configured to simulate performance of the vehicle (10) based on one or more switching methods from the online controller (102, 104) to each of the one or more offline controllers (102, 104).
Example 11: The computer system (100, 300) of any preceding example, wherein the processing circuitry (302) is configured to select the vehicle controller (102, 104) having the lowest total cost.
Example 12: A vehicle (10) comprising the computer system (100, 300) of any preceding example.
Example 13: A computer-implemented method (200) for determining a vehicle controller (102, 104) for use in control of a vehicle (10), the method (200) comprising: acquiring (202), by processing circuitry (302) of a computer system (100, 300), a plurality of input values for each of one or more input variables (116, 118) for simulating performance of the vehicle (10), wherein the plurality of input values represent an uncertainty in the respective input variable (116, 118); simulating (204), by the processing circuitry (302), performance of the vehicle (10) for each of a plurality of vehicle controllers (102, 104), wherein a respective simulation is performed for each vehicle controller (102, 104) for a plurality of possible combinations of input values; determining (206), by the processing circuitry (302), a total cost for each vehicle controller (102, 104) based on the plurality of simulations performed for the respective vehicle controller (102, 104); and selecting (208), by the processing circuitry (302), a vehicle controller (102, 104) of the plurality of vehicle controllers (102, 104) based on the determined costs.
Example 14: The computer-implemented method (200) of example 13, wherein the plurality of input values for a respective input variable (116, 118) comprises an upper and lower bound for the input variable (116, 118) and/or a distribution of input values.
Example 15: The computer-implemented method (200) of example 13 or 14, wherein the plurality of input values are user-defined, determined based on historical data, and/or determined based on a statistical method.
Example 16: The computer-implemented method (200) of any of examples 13 to 15, comprising simulating (204), by the processing circuitry (302), performance of the vehicle (10) based on a current operating point of the vehicle (10).
Example 17: The computer-implemented method (200) of any of examples 13 to 16, comprising: simulating (204), by the processing circuitry (302), performance of the vehicle (10) based on a plurality of operating points of the vehicle (10); and storing, by the processing circuitry (302), the determined total costs in a computer storage system of the vehicle (10).
Example 18: The computer-implemented method (200) of any of examples 13 to 17, comprising determining (206), by the processing circuitry (302), a cost associated with each simulation for the respective vehicle controller (102, 104), and determining a sum of the determined costs, for example a weighted sum.
Example 19: The computer-implemented method (200) of example 18, comprising determining (206), by the processing circuitry (302), the cost associated with a simulation based on one or more of longitudinal, lateral, and/or vertical acceleration and/or jerk of the vehicle (10), energy losses of the vehicle (10), a force margin to the friction limit of the tyres of the vehicle (10), a tyre wear value, peak power of the vehicle (10), deviation from a reference path, a yaw rate and/or deviation from a target yaw rate of the vehicle (10), a velocity and/or deviation from a target velocity of the vehicle (10), a roll angle of the vehicle (10), an articulation angle between units of the vehicle (10), and a pitch angle of the vehicle (10).
Example 20: The computer-implemented method (200) of any of examples 13 to 19, comprising discarding, by the processing circuitry (302), any vehicle controllers (102, 104) having simulation results that are outside of a set of predetermined limits and/or having a cost above a predetermined value.
Example 21: The computer-implemented method (200) of any of examples 13 to 20, wherein the plurality of vehicle controllers (102, 104) comprises an online vehicle controller (102, 104) and one or more offline vehicle controllers (102, 104).
Example 22: The computer-implemented method (200) of example 21, comprising simulating (204), by the processing circuitry (302), performance of the vehicle (10) based on one or more switching methods from the online controller (102, 104) to each of the one or more offline controllers (102, 104).
Example 23: The computer-implemented method (200) of any of examples 13 to 22, comprising selecting (208), by the processing circuitry (302), the vehicle controller (102, 104) having the lowest total cost.
Example 24: A computer program product comprising program code for performing, when executed by processing circuitry (302), the computer-implemented method (200) of any of examples 13 to 23.
Example 25: A non-transitory computer-readable storage medium comprising instructions, which when executed by processing circuitry (302), cause the processing circuitry to perform the computer-implemented method (200) of any of examples 13 to 23.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the appended claims. In the drawings and specification, there have been disclosed aspects for purposes of illustration only and not for purposes of limitation, the scope of the inventive concepts being set forth in the following claims.

## Claims

1. A computer system (100, 300) for selecting a vehicle controller (102, 104) for use in control of a vehicle (10), the computer system (100, 300) comprising processing circuitry (302) configured to:
acquire a plurality of input values for each of one or more input variables (116, 118) for simulating performance of the vehicle (10), wherein the plurality of input values represent an uncertainty in the respective input variable (116, 118);
simulate performance of the vehicle (10) for each of a plurality of vehicle controllers (102, 104), wherein a respective simulation is performed for each vehicle controller (102, 104) for each of a plurality of combinations of input values;
determine a total cost for each vehicle controller (102, 104) based on the plurality of simulations performed for the respective vehicle controller (102, 104); and
select a vehicle controller (102, 104) from the plurality of vehicle controllers (102, 104) based on the determined costs.

2. The computer system (100, 300) of claim 1, wherein the plurality of input values for a respective input variable (116, 118) comprises an upper and lower bound for the input variable (116, 118) and/or a distribution of input values.

3. The computer system (100, 300) of claim 1 or 2, wherein the plurality of input values are user-defined, determined based on historical data, and/or determined based on a statistical method.

4. The computer system (100, 300) of any preceding claim, wherein the processing circuitry (302) is configured to simulate performance of the vehicle (10) based on a current operating point of the vehicle (10).

5. The computer system (100, 300) of any preceding claim, wherein the processing circuitry (302) is configured to:
simulate performance of the vehicle (10) based on a plurality of operating points of the vehicle (10); and
store the determined total costs in a computer storage system of the vehicle (10).

6. The computer system (100, 300) of any preceding claim, wherein determining a total cost for a vehicle controller (102, 104) comprises determining a cost associated with each simulation for the respective vehicle controller (102, 104), and determining a sum of the determined costs.

7. The computer system (100, 300) of claim 6, wherein the cost associated with a simulation is determined based on one or more of longitudinal, lateral, and/or vertical acceleration and/or jerk of the vehicle (10), energy losses of the vehicle (10), a force margin to the friction limit of the tyres of the vehicle (10), a tyre wear value, peak power of the vehicle (10), deviation from a reference path, a yaw rate and/or deviation from a target yaw rate of the vehicle (10), a velocity and/or deviation from a target velocity of the vehicle (10), a roll angle of the vehicle (10), an articulation angle between units of the vehicle (10), and a pitch angle of the vehicle (10).

8. The computer system (100, 300) of any preceding claim, wherein the processing circuitry (302) is configured to discard any vehicle controllers (102, 104) having simulation results that are outside of a set of predetermined limits and/or having a cost above a predetermined value.

9. The computer system (100, 300) of any preceding claim, wherein the plurality of vehicle controllers (102, 104) comprises an online vehicle controller (102, 104) and one or more offline vehicle controllers (102, 104).

10. The computer system (100, 300) of claim 9, wherein the processing circuitry (302) is configured to simulate performance of the vehicle (10) based on one or more switching methods from the online controller (102, 104) to each of the one or more offline controllers (102, 104).

11. The computer system (100, 300) of any preceding claim, wherein the processing circuitry (302) is configured to select the vehicle controller (102, 104) having the lowest total cost.

12. A vehicle (10) comprising the computer system (100, 300) of any preceding claim.

13. A computer-implemented method (200) for determining a vehicle controller (102, 104) for use in control of a vehicle (10), the method (200) comprising:
acquiring (202), by processing circuitry (302) of a computer system (100, 300), a plurality of input values for each of one or more input variables (116, 118) for simulating performance of the vehicle (10), wherein the plurality of input values represent an uncertainty in the respective input variable (116, 118);
simulating (204), by the processing circuitry (302), performance of the vehicle (10) for each of a plurality of vehicle controllers (102, 104), wherein a respective simulation is performed for each vehicle controller (102, 104) for a plurality of possible combinations of input values;
determining (206), by the processing circuitry (302), a total cost for each vehicle controller (102, 104) based on the plurality of simulations performed for the respective vehicle controller (102, 104); and
selecting (208), by the processing circuitry (302), a vehicle controller (102, 104) of the plurality of vehicle controllers (102, 104) based on the determined costs.

14. A computer program product comprising program code for performing, when executed by processing circuitry (302), the computer-implemented method (200) of claim 13.

15. A non-transitory computer-readable storage medium comprising instructions, which when executed by processing circuitry (302), cause the processing circuitry to perform the computer-implemented method (200) of claim 13.

## Patentansprüche

1. Computersystem (100, 300) zum Auswählen einer Fahrzeugsteuerung (102, 104) zur Verwendung beim Steuern eines Fahrzeugs (10), das Computersystem (100, 300) umfasst eine Verarbeitungsschaltung (302), die zu Folgendem konfiguriert ist:
Erfassen einer Vielzahl von Eingangswerten für jede von einer oder mehreren Eingangsvariablen (116, 118) zum Simulieren einer Leistung des Fahrzeugs (10), wobei die Vielzahl von Eingangswerten eine Unsicherheit in der jeweiligen Eingangsvariablen (116, 118) darstellt;
Simulieren einer Leistung des Fahrzeugs (10) für jede einer Vielzahl von Fahrzeugsteuerungen (102, 104), wobei eine jeweilige Simulation für jede Fahrzeugsteuerung (102, 104) für jede einer Vielzahl von Kombinationen von Eingangswerten durchgeführt wird;
Bestimmen von Gesamtkosten für jede Fahrzeugsteuerung (102, 104) basierend auf der Vielzahl von Simulationen, die für die jeweilige Fahrzeugsteuerung (102, 104) durchgeführt werden; und
Auswählen einer Fahrzeugsteuerung (102, 104) aus der Vielzahl von Fahrzeugsteuerungen (102, 104) basierend auf den bestimmten Kosten.

2. Computersystem (100, 300) nach Anspruch 1, wobei die Vielzahl von Eingabewerten für eine jeweilige Eingabevariable (116, 118) eine obere und untere Grenze für die Eingabevariable (116, 118) und/oder eine Verteilung von Eingabewerten umfasst.

3. Computersystem (100, 300) nach Anspruch 1 oder 2, wobei die Vielzahl von Eingabewerten benutzerdefiniert sind, die basierend auf historischen Daten bestimmt werden und/oder basierend auf einem statistischen Verfahren bestimmt werden.

4. Computersystem (100, 300) nach einem der vorherigen Ansprüche, wobei die Verarbeitungsschaltung (302) konfiguriert ist, um eine Leistung des Fahrzeugs (10) basierend auf einem aktuellen Betriebspunkt des Fahrzeugs (10) zu simulieren.

5. Computersystem (100, 300) nach einem der vorherigen Ansprüche, wobei die Verarbeitungsschaltung (302) ferner zu Folgendem konfiguriert ist:
Simulieren einer Leistung des Fahrzeugs (10) basierend auf einer Vielzahl von Betriebspunkten des Fahrzeugs (10); und
Speichern der bestimmten Gesamtkosten in einem Computerspeichersystem des Fahrzeugs (10).

6. Computersystem (100, 300) nach einem der vorherigen Ansprüche, wobei ein Bestimmen der Gesamtkosten für eine Fahrzeugsteuerung (102, 104) ein Bestimmen von Kosten, die mit jeder Simulation für die jeweilige Fahrzeugsteuerung (102, 104) assoziiert sind, und ein Bestimmen einer Summe der bestimmten Kosten umfasst.

7. Computersystem (100, 300) nach Anspruch 6, wobei die Kosten, die mit einer Simulation assoziiert sind, basierend auf einem oder mehreren von Längs-, Quer- und/oder Vertikalbeschleunigung und/oder Ruckeln des Fahrzeugs (10), Energieverlusten des Fahrzeugs (10), einer Kraftmarge zu der Reibungsgrenze der Reifen des Fahrzeugs (10), einem Reifenverschleißwert, einer Spitzenleistung des Fahrzeugs (10), einer Abweichung von einem Referenzweg, einer Gierrate und/oder Abweichung von einer Soll-Gierrate des Fahrzeugs (10), einer Geschwindigkeit und/oder Abweichung von einer Soll-Geschwindigkeit des Fahrzeugs (10), einem Rollwinkel des Fahrzeugs (10), einem Knickwinkel zwischen Einheiten des Fahrzeugs (10) und einem Nickwinkel des Fahrzeugs (10) bestimmt wird.

8. Computersystem (100, 300) nach einem der vorherigen Ansprüche, wobei die Verarbeitungsschaltung (302) konfiguriert ist, um Fahrzeugsteuerungen (102, 104) zu verwerfen, die Simulationsresultate aufweisen, die außerhalb eines Satzes vorbestimmter Grenzen sind, und/oder Kosten aufweisen, die über einem vorbestimmten Wert sind.

9. Computersystem (100, 300) nach einem der vorherigen Ansprüche, wobei die Vielzahl von Fahrzeugsteuerungen (102, 104) eine Online-Fahrzeugsteuerung (102, 104) und eine oder mehrere Offline-Fahrzeugsteuerungen (102, 104) umfasst.

10. Computersystem (100, 300) nach Anspruch 9, wobei die Verarbeitungsschaltung (302) konfiguriert ist, um eine Leistung des Fahrzeugs (10) basierend auf einem oder mehreren Umschaltverfahren von der Online-Steuerung (102, 104) zu jeder von der einen oder den mehreren Offline-Steuerungen (102, 104) simuliert.

11. Computersystem (100, 300) nach einem der vorherigen Ansprüche, wobei die Verarbeitungsschaltung (302) konfiguriert ist, um die Fahrzeugsteuerung (102, 104) auszuwählen, die die niedrigsten Gesamtkosten aufweist.

12. Fahrzeug (10), umfassend das Computersystem (100, 300) nach einem der vorherigen Ansprüche.

13. Computerimplementiertes Verfahren (200) zum Bestimmen einer Fahrzeugsteuerung (102, 104) zur Verwendung beim Steuern eines Fahrzeugs (10), das Verfahren (200) umfassend:
Erfassen (202), durch eine Verarbeitungsschaltung (302) eines Computersystems (100, 300), einer Vielzahl von Eingangswerten für jede von einer oder mehreren Eingangsvariablen (116, 118) zum Simulieren einer Leistung des Fahrzeugs (10), wobei die Vielzahl von Eingangswerten eine Unsicherheit in der jeweiligen Eingangsvariablen (116, 118) darstellt;
Simulieren (204), durch die Verarbeitungsschaltung (302), einer Leistung des Fahrzeugs (10) für jede einer Vielzahl von Fahrzeugsteuerungen (102, 104), wobei eine jeweilige Simulation für jede Fahrzeugsteuerung (102, 104) für jede einer Vielzahl von Kombinationen von Eingangswerten durchgeführt wird;
Bestimmen (206), durch die Verarbeitungsschaltung (302), von Gesamtkosten für jede Fahrzeugsteuerung (102, 104) basierend auf der Vielzahl von Simulationen, die für die jeweilige Fahrzeugsteuerung (102, 104) durchgeführt werden; und
Auswählen (208), durch die Verarbeitungsschaltung (302), einer Fahrzeugsteuerung (102, 104) aus der Vielzahl von Fahrzeugsteuerungen (102, 104) basierend auf den bestimmten Kosten.

14. Computerprogrammprodukt, umfassend Programmcode, um bei Ausführung durch eine Verarbeitungsschaltung (302) das computerimplementierte Verfahren (200) nach Anspruch 13 durchzuführen.

15. Nicht-transitorisches, rechnerlesbares Speichermedium, umfassend Anweisungen, die, wenn sie von einer Verarbeitungsschaltung (302) ausgeführt werden, die Verarbeitungsschaltung veranlassen, das rechnerimplementierte Verfahren (200) nach Anspruch 13 durchzuführen.

## Revendications

1. Système informatique (100, 300) pour la sélection d'un module de contrôle de véhicule (102, 104) à utiliser pour contrôler un véhicule (10), le système informatique (100, 300) comprenant un circuit de traitement (302) configuré pour :
acquérir une pluralité de valeurs d'entrée pour chacune d'une ou plusieurs variables d'entrée (116, 118) afin de simuler les performances du véhicule (10), dans lequel la pluralité de valeurs d'entrée représentent une incertitude dans la variable d'entrée (116, 118) respective ;
simuler les performances du véhicule (10) pour chacun d'une pluralité de modules de contrôle de véhicule (102, 104), dans lequel une simulation respective est effectuée pour chaque module de contrôle de véhicule (102, 104) pour chacune d'une pluralité de combinaisons de valeurs d'entrée ;
déterminer un coût total pour chaque module de contrôle de véhicule (102, 104) sur la base de la pluralité de simulations effectuées pour le module de contrôle de véhicule (102, 104) respectif ; et
sélectionner un module de contrôle de véhicule (102, 104) parmi la pluralité de modules de contrôle de véhicule (102, 104) en fonction des coûts déterminés.

2. Système informatique (100, 300) selon la revendication 1, dans lequel la pluralité de valeurs d'entrée pour une variable d'entrée (116, 118) respective comprend une borne supérieure et une borne inférieure pour la variable d'entrée (116, 118) et/ou une distribution de valeurs d'entrée.

3. Système informatique (100, 300) selon la revendication 1 ou 2, dans lequel la pluralité de valeurs d'entrée sont définies par l'utilisateur, déterminées à partir de données historiques et/ou déterminées par un procédé statistique.

4. Système informatique (100, 300) selon l'une quelconque des revendications précédentes, dans lequel le circuit de traitement (302) est configuré pour simuler les performances du véhicule (10) sur la base d'un point de fonctionnement actuel du véhicule (10).

5. Système informatique (100, 300) selon l'une quelconque des revendications précédentes, dans lequel le circuit de traitement (302) est configuré pour :
simuler les performances du véhicule (10) en fonction d'une pluralité de points de fonctionnement du véhicule (10) ; et
enregistrer les coûts totaux déterminés dans un système de stockage informatique du véhicule (10).

6. Système informatique (100, 300) selon l'une quelconque des revendications précédentes, dans lequel la détermination d'un coût total pour un module de contrôle de véhicule (102, 104) comprend la détermination d'un coût associé à chaque simulation pour le module de contrôle de véhicule (102, 104) respectif, et la détermination d'une somme des coûts déterminés.

7. Système informatique (100, 300) selon la revendication 6, dans lequel le coût associé à une simulation est déterminé sur la base d'un ou plusieurs éléments parmi une accélération et/ou un à-coup longitudinal, latéral et/ou vertical du véhicule (10), des pertes d'énergie du véhicule (10), une marge de force par rapport à la limite de frottement des pneus du véhicule (10), une valeur d'usure des pneus, la puissance maximale du véhicule (10), un écart par rapport à une trajectoire de référence, une vitesse de lacet et/ou un écart par rapport à une vitesse de lacet cible du véhicule (10), une vitesse et/ou un écart par rapport à une vitesse cible du véhicule (10), un angle de roulis du véhicule (10), un angle d'articulation entre les unités du véhicule (10) et un angle de tangage du véhicule (10).

8. Système informatique (100, 300) selon l'une quelconque des revendications précédentes, dans lequel le circuit de traitement (302) est configuré pour écarter tout module de contrôle de véhicule (102, 104) ayant des résultats de simulation qui se situent en dehors d'un ensemble de limites prédéterminées et/ou ayant un coût supérieur à une valeur prédéterminée.

9. Système informatique (100, 300) selon l'une quelconque des revendications précédentes, dans lequel la pluralité de modules de contrôle de véhicule (102, 104) comprend un module de contrôle de véhicule en ligne (102, 104) et un ou plusieurs modules de contrôle de véhicule hors ligne (102, 104).

10. Système informatique (100, 300) selon la revendication 9, dans lequel le circuit de traitement (302) est configuré pour simuler les performances du véhicule (10) sur la base d'un ou plusieurs procédés de commutation du module de contrôle de véhicule en ligne (102, 104) à chacun des un ou plusieurs modules de contrôle de véhicule hors ligne (102, 104).

11. Système informatique (100, 300) selon l'une quelconque des revendications précédentes, dans lequel le circuit de traitement (302) est configuré pour sélectionner le module de contrôle de véhicule (102, 104) ayant le coût total le plus bas.

12. Véhicule (10) comprenant le système informatique (100, 300) selon l'une quelconque des revendications précédentes.

13. Procédé (200) mis en œuvre par ordinateur pour déterminer un module de contrôle de véhicule (102, 104) à utiliser pour contrôler un véhicule (10), le procédé (200) comprenant :
l'acquisition (202), par le circuit de traitement (302) d'un système informatique (100, 300), d'une pluralité de valeurs d'entrée pour chacune d'une ou plusieurs variables d'entrée (116, 118) afin de simuler les performances du véhicule (10), dans lequel la pluralité de valeurs d'entrée représente une incertitude dans la variable d'entrée (116, 118) respective ;
la simulation (204), par le circuit de traitement (302), des performances du véhicule (10) pour chacun d'une pluralité de modules de contrôle de véhicule (102, 104), dans lequel une simulation respective est effectuée pour chaque module de contrôle de véhicule (102, 104) pour une pluralité de combinaisons possibles de valeurs d'entrée ;
la détermination (206), par le circuit de traitement (302), d'un coût total pour chaque module de contrôle de véhicule (102, 104) sur la base de la pluralité de simulations effectuées pour le module de contrôle de véhicule (102, 104) respectif ; et
la sélection (208), par le circuit de traitement (302), d'un module de contrôle de véhicule (102, 104) parmi la pluralité de modules de contrôle de véhicule (102, 104) sur la base des coûts déterminés.

14. Produit de programme informatique comprenant un code de programme pour réaliser, lorsqu'il est exécuté par le circuit de traitement (302), le procédé mis en œuvre par ordinateur (200) selon la revendication 13.

15. Support de stockage non transitoire lisible par ordinateur comprenant des instructions qui, lorsqu'elles sont exécutées par le circuit de traitement (302), amènent le circuit de traitement à réaliser le procédé mis en œuvre par ordinateur (200) selon la revendication 13.
